**Europäisches Patentamt**

**European Patent Office**

**Office européen des brevets**

(11) Veröffentlichungsnummer: **0 427 966 A2**

## (12) EUROPÄISCHE PATENTANMELDUNG

(21) Anmeldenummer: **90119716.0**

(22) Anmeldetag: **15.10.90**

(51) Int. Cl.5: **G01J 3/18**

(30) Priorität: **11.11.89 DE 3937599**

(43) Veröffentlichungstag der Anmeldung:
**22.05.91 Patentblatt 91/21**

(84) Benannte Vertragsstaaten:
**DE GB IT**

(71) Anmelder: **BODENSEEWERK PERKIN-ELMER GMBH**
**Askaniaweg 4**
**W-7770 Überlingen/Bodensee(DE)**

(72) Erfinder: **Wulf, Jürgen, Dr.**
**Langgasse 22**
**W-7770 Überlingen(DE)**

(74) Vertreter: **Weisse, Jürgen, Dipl.-Phys. et al**
**Patentanwälte Dipl.-Phys. Jürgen Weisse**
**Dipl.-Chem. Dr. Rudolf Wolgast Bökenbusch**
**41 Postfach 11 03 86**
**W-5620 Velbert 11 Langenberg(DE)**

(54) **Doppelmonochromator.**

(57) Ein Doppelmonochromator enthält einen Eintrittsspalt 20, der über einen ersten Gittermonochromator 36 in der Ebene eines Mittenspaltes 34 abgebildet wird. Über einen zweiten, mit dem ersten Gittermonochromator 36 übereinstimmenden Gittermonochromator 58 wird der Mittenspalt 34 in der Ebene des Austrittsspaltes 34 abgebildet. Um einen solchen Doppelmonochromator wahlweise als Einfachmonochromator mit erhöhtem Lichtstrom verwenden zu können, sind vor dem Mittenspalt 34 und hinter dem Austrittsspalt 50 Umlenkspiegel 64 und 66 in den Strahlengang hineinbewegbar. Zwischen den Umlenkspiegeln 64 und 66 ist ein zusätzlicher Spalt angeordnet. Die Anordnung ist so, daß sich bei beiden Betriebsweisen im wesentlichen übereinstimmende Bündelgeometrien am Ausgang ergeben.

Fig.2

EP 0 427 966 A2

## TECHNISCHES GEBIET

Die Erfindung betrifft einen Doppelmonochromator mit einem Eintrittsspalt, der über erste dispergierende Mittel in der Ebene eines Mittenspaltes abgebildet wird, mit einem Austrittsspalt, zweiten dispergierenden Mitteln, über welche der Mittenspalt in der Ebene des Austrittsspaltes abgebildet wird, und mit einem ersten Umlenkspiegel, der in Strahlungsrichtung vor dem Mittenspalt in den Strahlengang hineinbewegbar ist.

## Zugrundeliegender Stand der Technik

Ein Doppelmonochromator dient dazu, bei einer vorgegebenen Spaltbreit eine höhere spektrale Auflösung zu erreichen als mit einem einfachen Monochromator. Außerdem wird bei einem Doppelmonochromator das Störlicht stark vermindert.

Einfachmonochromatoren enthalten einen Lichtquellenteil mit einer Lichtquelle und einem Hohlspiegel, durch welchen die Lichtquelle auf den Eintrittsspalt des eigentlichen Monochromators aogebildet wird. Bei einem solchen Einfachmonochromator fällt auf den Eintrittsspalt Licht verschiedener Wellenlängen, beispielsweise ein Kontinuum.

Dieses Licht läuft nicht nur längs des idealen, theoretischen Strahlenganges durch das Gerät, wobei nur ein definiertes Spektralband durch den Austrittsspalt gelangen würde. Vielmehr gelangt auch ein gewisser Anteil des durch den Eintrittsspalt eingetretenen Lichts durch Streuung oder dergleichen auf anderen Wegen zum Austrittsspalt, so daß am Austrittsspalt außer dem gewünschten Spektralband auch ein Anteil anderer unerwünschter Wellenlängen erscheint. Dieser Anteil kann möglicherweise zwar klein sein. Durch ungünstige Lampenempfindlichkeits-Charakteristiken mancher photoelektrischer Empfänger, die am Rande des abgetasteten Wellenlängenbereichs eine steil abfallende Flanke haben, kann dadurch jedoch das Verhältnis von Nutzsignal zu Störsignal in untragbarer Weise verschlechtert werden.

Bei einem Doppelmonochromator fällt durch den Austrittsspalt des eingangsseitigen Monochromators schon im wesentlichen nur Licht der gewünschten Wellenlänge. Das Störlicht unterliegt in dem zweiten ausgangsseitigen Monochromator einer erneuten Dispersion, so daß von diesem Störlicht wieder nur ein bestimmter Bruchteil durch Streuung oder dergleichen zum Ausgangsspalt gelangt. Dieser Störlichtanteil nach Durchgang durch einen Doppelmonochromator ist jedoch sehr klein. Außerdem erfolgt eine erneute Dispersion des Nutzlichts, so daß bei vorgegebener Spaltbreite die spektrale Auflösung des Monochromators verbessert wird.

Die DE-A-3 511 676 beschreibt vier Ausführungen eines Doppelmonochromators mit einem Eintrittsspalt, der über erste dispergierende Mittel in der Ebene eines Zwischenspaltes abgebildet wird, und mit einem Austrittsspalt, sowie zweiten dispergierenden Mitteln, über welche der Zwischenspalt in der Ebene des

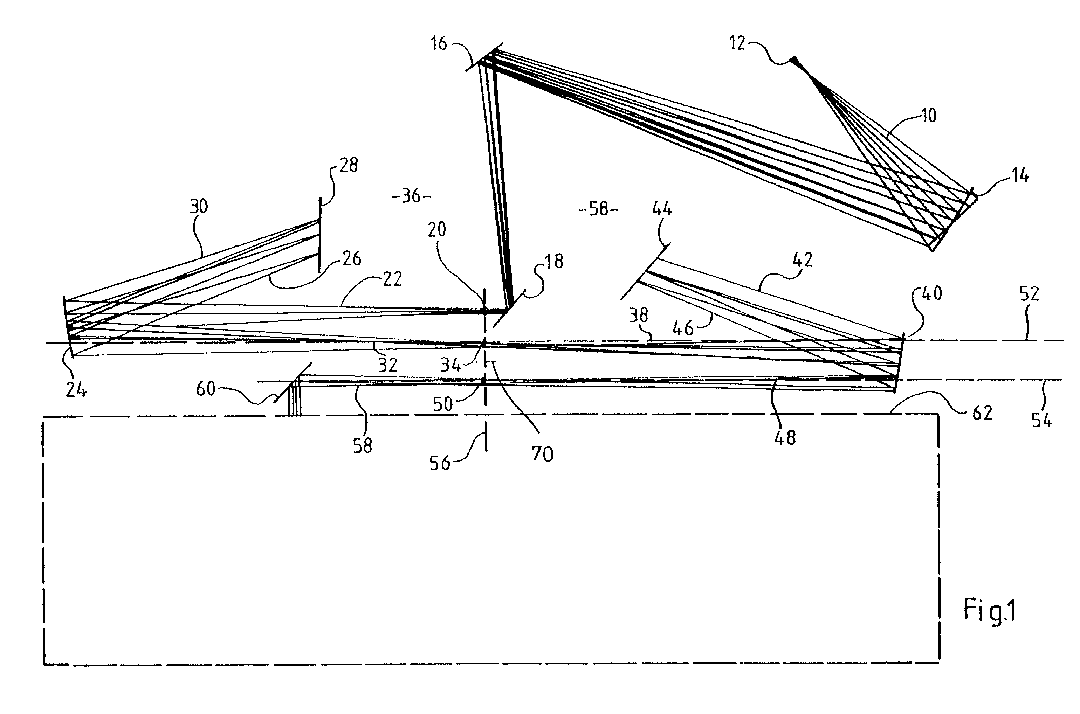

Austrittsspalts abgebildet ,wird. Auch dieser Doppelmonochromator kann wahlweise als Einfachmonochromator betrieben werden. Dazu sind nach Figur 1 die ersten dispergierenden Mittel mit einem Spiegel, der ein Hohlspiegel oder Planspiegel sein kann, auf seiner Drehbasis so angeordnet, dass zur Doppelmonochromatorfunktion die ersten dispergierenden Mittel und zur Einfachmonochromatorfunktion der Spiegel in den Strahlengang des Doppelmonochromators eingeschwenkt wird. Der Spiegel ist im letzten Fall in Strahlungsrichtung vor dem Zwischenspalt angeordnet.

Bei dieser bekannten Anordnung tritt der Spiegel an die Stelle der ersten dispergierenden Mittel in den Strahlengang des Doppelmonochromators, wenn dieser als Einfachmonochromator betrieben wird. Demzufolge erfordert die Schwenkbewegung des Spiegels auch eine Schwenkbewegung der dispergierenden Mittel, die dabei von den zugehörigen Wellenlängenantriebsmitteln entkoppelt werden müssen.

Die DE-A-3 640 044 betrifft eine Monochromatoranordnung mit einem Einfachmonochromator in Verbindung mit einem Strahlengang z.B. eines abstimmbaren IR-Lasers. Der Strahlengang verläuft quer zum Monochromator durch ein Umlenkeinrichtungsgehäuse mit einer Eingangsblende und einer Ausgangsblende, zwischen denen sich erste und zweite Umlenkspiegel befinden, die senkrecht zueinander stehen und deren zweiter in bezug auf den Strahlengang quer gegenüber dem ersten versetzt ist. Der erste Umlenkspiegel lenkt den einfallenden Strahl in den Monochromator, durch den der Ausgangsstrahl auf den zweiten Umlenkspiegel gerichtet wird. In Strahlungsrichtung hinter der Ausgangsblende sind zwei weitere Umlenkspiegel angeordnet, durch die der an dem zweiten Umlenkspiegel umgelenkte Ausgangsstrahl auf den zu einem Detektor führenden Strahlengang geleitet wird.

Durch die DE-A-3 443 727 ist ein Mikrophotometer mit Bildscanning und Wellenlängenscanning bekannt, bei dem eine Messblende zu Abtastzwecken quer zu einem Strahlengang, der zu einem Detektor führt und eine Linse enthält, verschiebbar ist. In den Strahlengang kann eine optische Umlenkeinrichtung mit zwei Spiegeln eingeschoben werden, die das einfallende Licht zum Abtasten der Lichtwellenlänge durch den Strahlengang eines Einfachmonochromators hindurch umleiten. Diese Anordnung verwendet zwei verschiebbar angeordnete Umlenkspiegel, um das Licht aus dem vorgegebenen Strahlengang abzuleiten und durch den Einfachmonochromator hindurch auf den Strahlengang zurückzuführen.

Die US-A-4 102 576 betrifft einen Doppelmonochromator mit einem Eintrittsspalt, der über erste dispergierende Mittel in der Ebene eines Zwischenspaltes abgebildet wird, und mit einem Austrittsspalt, sowie zweiten dispergierenden Mitteln, über welche der Zwischenspalt in der Ebene des Austrittsspalts abgebildet wird. Die Spalten werden von Spaltbacken an zwei durch einen Keil gegeneinander verschieblichen Spaltplatten gebildet. Auf diese Weise kann die für den jeweiligen Aufbau des Doppelmonochromators optimale Ausgangsbandbreite eingestellt werden.

Die DE-B-2 730 613 betrifft einen Doppelmonochromator, bestehend aus einem Vormonochromator mit Beugungsgitter und einem Hauptnonochromator mit Beugungsgitter, auf dessen Eintrittsspalt durch den Vormonochromator eine Lichtquelle abgebildet wird. Zwischen der Lichtquelle und dem Vormonochromator befindet sich ein Filterrad. Die Beugungsgitter und das Filterrad sind mit einem Wellenlängenantrieb gekoppelt, insbesondere derart, dass das Beugungsgitter des Vormonochromators durch einen linearen Stellantrieb angetrieben werden kann.

In einer Weiterbildung ist nach der DE-C2-3 113 984 eine zweite Lichtquelle vorgesehen, und das Filterrad ist als Filterschieber mit einem Planspiegel ausgebildet, durch den das von der zweiten Lichtquelle ausgehende Licht in den Strahlengang des Vormonochromators eingespiegelt wird.

Die US-A-4 310 244 beschreibt im Zusammenhang mit Figur 4 einen Einfachmonochromator mit zwei Beugungsgittern, die mit einem sphärischen Spiegel zusammenwirken. Zwischen den Beugungsgittern befindet sich ein Spiegel, der zwei vorbestimmte Stellungen einnehmen kann. In einer ersten Stellung des Spiegels wird das Licht, das vom sphärischen Spiegel ausgeht, dem ersten Beugungsgitter und in einer zweiten Stellung dem zweiten Beugungsgitter zugeführt. Die Verstellung des Spiegels ist mit dem Wellenlängenantrieb gekoppelt, so dass der Einfachmonochromator in Abhängigkeit von dem angesteuerten Wellenlängenbereich mit dem ersten oder dem zweiten Beugungsgitter betrieben wird.

Die Verwendung eines Doppelmonochromators verringert den Störlichtanteil und vergrößert die spektrale Auflösung des Monochromators. Ein Doppelmonochromator ist jedoch mit einem Lichtverlust verbunden. Es gibt Fälle, in denen die Unterdrückung von Störlicht und die Erhöhung der spektralen Auflösung des Monochromators wesentlich sind. Es kommen jedoch auch Fälle vor, wo zur Erzeugung eines ausreichenden Signals unter Verzicht auf hohe spektrale Auflösung eine Erhöhung des durch den Monochromator hindurchtretenden Lichtstromes erwünscht ist.

## Offenbarung der Erfindung

Der Erfindung liegt die Aufgabe zugrunde, einen Doppelmonochromator der eingangs genannten Art so Sauszubilden, daß er auf einfache Weise und ohne Verstellung der Spaltbreite wahlweise unter Inkaufnahme eines geringen Lichtstromes mit guter Unterdrückung des Störlichts und hoher spektraler Auflösung oder unter Inkaufnahme einer geringeren spektralen Auflösung mit einem erhöhten Lichtstrom (verglichen mit der zuerst genannten Betriebsweise) arbeitet.

Erfindungsgemäß wird diese Aufgabe dadurch gelöst, daß

a) ein zweiter Umlenkspiegel (66), der in Strahlungsrichtung hinter dem Austrittsspalt (50) in den Strahlengang hineinbewegbar ist,

b) der erste und zweite Umlenkspiegel (64, 66) unabhängig von den ersten und zweiten dispergierenden Mitteln (36, 58) in den Strahlengang hinein und aus diesem herausbewegbar sind,

c) zwischen den Umlenkspiegeln ein zusätzlicher Spalt angeordnet ist.

Auf diese Weise kann das Gerät mit den eingangsseitigen, ersten dispergierenden Mitteln als Einfachmonochromator benutzt werden. Der Strahlengang wird vor dem Mittenspalt abgeknickt und hinter dem Austrittsspalt in die Richtung des normalerweise aus dem Austrittsspalt austretenden Lichtbündels umgelenkt. Der zusätzliche Spalt dient als Austrittsspalt dieses Einfachmonochromators. Es ergibt sich damit bei verminderter spektraler Auflösung ein erhöhter Lichtstrom. Wenn die Umlenkspiegel aus dem Strahlengang herausbewegt sind, wirkt das Gerat in der üblichen Weise als Doppelmonochromator mit erhöhter spektraler Auflösung und erhöhter Unterdrückung von Störlicht, jedoch mit reduziertem Lichtstrom. Diese Umschaltung kann im Bedarfsfall auf einfache Weise geschehen, ohne daß eine Manipulation an den Spaltbreiten erforderlich wäre.

Bei einer bevorzugten Ausführung der Erfindung verlaufen die Bündelachsen der durch den Mittenspalt und den Austrittsspalt tretenden Lichtbündel antiparallel. Das bedeutet, daß die Bündelachsen geometrisch parallel sind, die Laufrichtungen der Lichtbündel jedoch einander entgegengesetzt sind. Die Ebenen der in den Strahlengang hineinbewegbaren Umlenkspiegel bilden einen rechten Winkel. Dadurch wird bei in den Strahlengang hineinbewegten Umlenkspiegeln das auf den Mittenspalt gerichtete Lichtbündel längs der Achse des bei nicht hineinbewegten Umlenkspiegeln durch den Austrittsspalt tretenden Lichtbündels reflektiert. Vorzugsweise bildet dabei der vor dem Eintrittsspalt in den Strahlengang hineinbewegte Umlenkspiegel mit der Bündelachse des Lichtbündels einen Winkel von 45°. Der hinter dem Austrittsspalt in den Strahlengang hineinbewegte Umlenkspiegel bildet mit der Bündelachse des durch den Austrittsspalt tretenden Lichtbündels einen Winkel von 135°. Die Umlenkspiegel sind eine dem halben Abstand der antiparallelen Lichtbündel entsprechende Strecke vor dem Mittenspalt bzw. hinter dem Austrittsspalt in den Strahlengang hineinbewegbar. Der zusätzliche Spalt ist in der Mitte zwischen den antiparallelen Lichtbündeln angeordnet. Bei Betrieb des Gerätes als Einfachmonochromator wird das Lichtbündel vor dem Mittenspalt um 90° abgelenkt. Es tritt durch den zusätzlichen Spalt. Die Bündelgeometrie ist an diesem zusätzlichen Spalt die gleiche wie an dem Mittenspalt. Von dem zweiten Umlenk spiegel wird das Lichtbündel dann nochmals um 90° umgelenkt. Es verläuft dann längs der Achse des Lichtbündels, das bei Doppelmonochromator-Betrieb aus dem Austrittsspalt austritt.

Die ersten und zweiten dispergierenden Mittel sind übereinstimmende Gittermonochromatoren. Das stellt sicher, daß die Bündelgeometrie des durch den zusätzlichen Spalt hindurchtretenden und von dem Umlenkspiegel umgelenkten Lichtbündels im wesentlichen der Bündelgeometrie des Lichtbündels entspricht, das bei Doppelmonochromator-Betrieb aus dem Austrittsspalt austritt.

Ein Ausführungsbeispiel der Erfindung ist nachstehend unter Bezugnahme auf die zugehörige Zeichnung näher erläutert:

## Kurze Beschreibung der Zeichnungen

Fig. 1 zeigt den Strahlengang eines Doppelmonochromators, der wahlweise als Doppelmonochromator oder als Einfachmonochromator verwendbar ist, in der Betriebsweise "Doppelmonochromator".

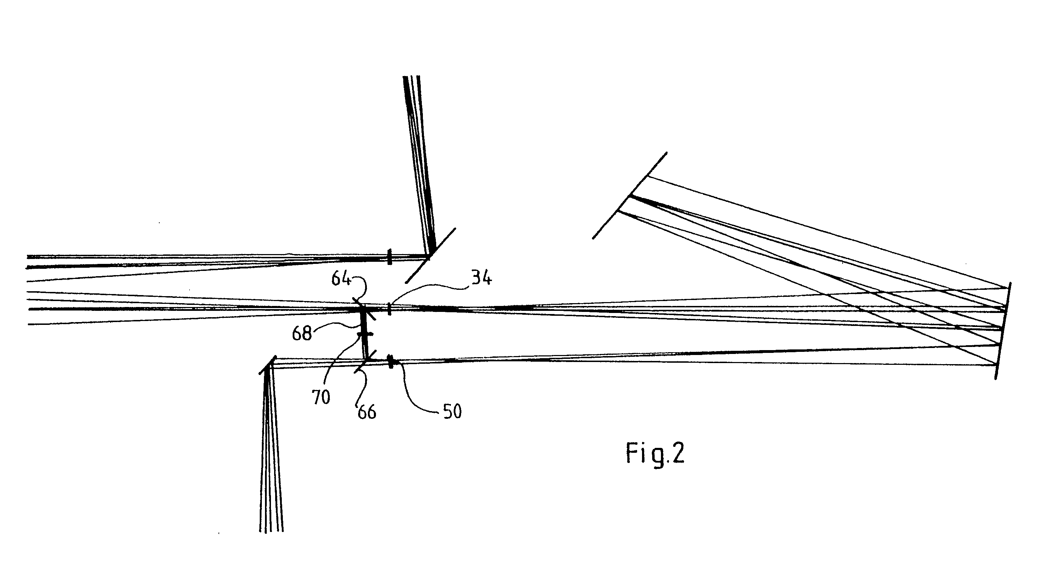

Fig. 2 zeigt einen Teil des Strahlenganges von Fig. 1 in der Betriebsweise "Einfachmonochromator".

## Bevorzugte Ausführung der Erfindung

Ein Lichtbündel 10 geht von einer Lichtquelle 12 aus. Das Lichtbündel 10 wird von einem sphärischen Spiegel 14 über einen Zylinderspiegel 16 und einen sphärischen Spiegel 18 auf einem Eintrittsspalt 20 gesammelt. Das durch den Eintrittsspalt 20 hindurchtretende Licht bildet ein Lichtbündel 22. Das Lichtbündel 22 wird von einem sphärischen Spiegel 24 parallelgerichtet. Das so erhaltene parallele Lichtbündel 26 fällt auf ein Gitter 28. Das Gitter 28 bewirkt in bekannter Weise eine Dispersion. Es entstehen parallele Lichtbündel unter unterschiedlichen Winkeln zu dem Gitter 28 und mit unterschiedlichen Wellenlängen. In der Figur ist nur ein solches paralleles Lichtbündel 30 dargestellt. Das Lichtbündel 30 fällt wieder auf den sphärischen Spiegel 24. Der sphärische Spiegel 24 sammelt das Licht des parallelen Lichtbündels 30 in einem konvergenten Lichtbündel 32 auf einem Mittenspalt 34. Der sphärische Spiegel 24 und das Gitter 28 bilden einen ersten Gitter-Monochromator 36, dessen Austrittsspalt von dem Mittenspalt gebildet ist. Dieser erste Gitter-Monochromator stellt die oben erwähnten "ersten dispergierenden Mittel" dar.

Das durch den Mittenspalt 34 hindurchtretende Lichtbündel 38 fällt auf einen sphärischen Spiegel 40. Der sphärische Spiegel 40 richtet das Lichtbündel 38 parallel. Es fällt als paralleles Lichtbündel 42 auf ein zweites Gitter 44. An dem Gitter 44 erfolgt wieder eine spektrale Dispersion des Lichts. Ein hier betrachtetes paralleles Lichtbündel 46 fällt wieder auf den sphärischen Spiegel 40. Der sphärische Spiegel 40 erzeugt ein konvergentes Lichtbündel 48, das auf einem Austrittsspalt 50 gesammelt wird. Die Bündelachsen des durch den Mittenspalt 34 hindurchtretenden Lichtbündels 32, 38 und des durch den Austrittsspalt 50 hindurchtretenden Lichtbündels 48 sind mit 52 bzw. 54 bezeichnet. Die Bündelachsen 52 und 54 sind zueinander antiparallel: die beiden Bündelachsen 52 und 54 sind geometrisch parallel, die Laufrichtungen des Lichtes längs der beiden Bündelachsen 52 und 54 sind jedoch einander entgegengerichtet. Der Eintrittsspalt 20, der Mittenspalt 34 und der Austrittsspalt 50 liegen in einer gemeinsamen Ebene 56, die senkrecht zu den Bündelachsen 52 und 54 der Bündel 32, 38 bzw. 48 verläuft.

Der sphärische Spiegel 40 und das Gitter 44 bilden einen zweiten Gittermonochromator 58. Dieser zweite Gittermonochromator bildet die "zweiten dispergierenden Mittel".

Das durch den Austrittsspalt 50 hindurchtretende divergierende Lichtbündel 58 wird durch einen Umlenkspiegel 60 umgelenkt und gelangt zu dem Proben- und Empfängerteil eines Spektralphotometers. Dieser Proben-und Empfängerteil ist an sich bekannt und im einzelnen hier nicht dargestellt. Der Proben- und Empfängerteil ist generell mit dem Bezugszeichen 62 versehen.

Der bisher geschilderte Aufbau ist im wesentlichen bekannt.

Nach der Erfindung ist vor dem Mittenspalt 34 ein erster Umlenkspiegel 64 in den Strahlengang hineinbewegbar, beispielsweise einschwenkbar. Ebenso ist hinter dem Austrittsspalt 50 ein zweiter Umlenkspiegel 66 in den Strahlengang hineinbewegbar. Der Umlenkspiegel 64 bildet einen Winkel von 45° mit der Bündelachse 52 des Lichtbündels 32. Das Lichtbündel 32 wird daher vor dem Mittenspalt 34 in einem rechten Winkel abgelenkt. Das Lichtbündel fällt dann auf den zweiten Umlenkspiegel 66. Der zweite Umlenkspiegel 66 bildet mit der Bündelachse 54 des bei Doppelmonochromator-Betrieb durch den Austrittsspalt 50 hindurchtretenden Lichtbündels 38 einen Winkel von 135°. Das abgelenkte Lichtbündel 68 wird dadurch von dem zweiten Umlenkspiegel 66 nochmals um 90° umgelenkt. Es verläuft dann längs der Achse 54 des Lichtbündels 48 in der gleichen Richtung wie dieses. Das Lichtbündel wird auf diese Weise ebenfalls von dem Umlenkspiegel 60 auf den Proben- und Lampenteil 62 des Spektralphotometers geleitet. Zwischen den Umlenkspiegeln 64 und 66 ist ein zusätzlicher Spalt 70 angeordnet.

Der erste Umlenkspiegel 64 ist eine dem halben Abstand der antiparallelen Lichtbündel 32 bzw. 48 entsprechende Strecke vor dem Mittenspalt 34 in den Strahlengang hineinbewegbar. Der zweite Umlenkspiegel 66 ist eine dem halben Abstand der antiparallelen Lichtbündel 32 und 48 entsprechende Strecke hinter dem Austrittsspalt 50 in den Strahlengang hineinbewegbar. Der zusätzliche Spalt 70 ist in der Mitte zwischen den antiparallelen Lichtbündeln 32 und 48 angeordnet. Auf diese Weise ist die Geometrie des auf den Proben- und Empfängerteil geleiteten Lichtbündels bei Doppelmonochromator-Betrieb und Einfachmonochromator-Betrieb im wesentlichen die gleiche.

## Ansprüche

1. Doppelmonochromator mit einem Eintrittsspalt (20), der über erste dispergierende Mittel (36) in der Ebene (56) eines Mittenspaltes (34) abgebildet wird, mit einem Austrittsspalt (50), zweiten dispergierenden Mitteln (58), über welche der Mittenspalt (34) in der Ebene (56) des Austrittsspaltes (50) abgebildet wird, und mit einem ersten Umlenkspiegel (64), der in Strahlungsrichtung vor dem Mittenspalt in den Strahlengang hineinbewegbar ist,
dadurch gekennzeichnet, daß
a) ein zweiter Umlenkspiegel (66), der in Strahlungsrichtung hinter dem Austrittsspalt (50) in den Strahlengang hineinbewegbar ist,
b) der erste und zweite Umlenkspiegel (64, 66) unabhängig von den ersten und zweiten dispergierenden Mitteln (36, 58) in den Strahlengang hinein und aus diesem herausbewegbar sind,

c) zwischen den Umlenkspiegeln (64, 66) ein zusätzlicher Spalt (70) angeordnet ist.

2. Doppelmonochromator nach Anspruch 1, **dadurch gekennzeichnet, daß**
a) die Bündelachsen (52, 54) der durch den Mittenspalt (34) und den Austrittsspalt (50) tretenden Lichtbündel (32, 38; 48, 50) parallel verlaufen,
b) die Ebenen der in den Strahlengang hineinbewegbaren Umlenkspiegel (64, 66) einen rechten Winkel bilden, so daß bei in den Strahlengang hineinbewegten Umlenkspiegeln (64, 66) das auf den Mittenspalt (34) gerichtete Lichtbündel (32) längs der Achse (54) des bei nichthineinbewegten Umlenkspiegeln (64, 66) durch den Austrittsspalt (50) tretenden Lichtbündels (58) reflektiert wird.

3. Doppelmonochromator nach Anspruch 2, **dadurch gekennzeichnet, daß**
a) der vor dem Mittenspalt (34) in den Strahlengang hineinbewegte Umlenkspiegel (64) mit der Bündelachse des Lichtbündels einen Winkel von 45° bildet,
b) der hinter dem Austrittsspalt (50) in den Strahlengang hineinbewegte Umlenkspiegel (66) mit der Bündelachse (54) des durch den Austrittsspalt tretenden Lichtbündels (58) einen Winkel von 135° bildet,
c) die Umlenkspiegel (64, 66) eine dem halben Abstand der antiparallelen Lichtbündel (32,38; 48, 58) entsprechende Strecke vor dem Mittenspalt (34) bzw. hinter dem Austrittsspalt (50) in den Strahlengang hineinbewegbar sind und
d) der zusätzliche Spalt (70) in der Mitte zwischen den antiparallelen Lichtbündeln (32, 38; 48, 58) angeordnet ist.

4. Doppelmonochromator nach Anspruch 3, **dadurch gekennzeichnet, daß** Mittenspalt (34) und Austrittsspalt (50) in einer zu den Bündelachsen (52, 54) senkrechten Ebene (56) liegen.

5. Doppelmonochromator nach Anspruch 3, **dadurch gekennzeichnet, daß** die ersten und zweiten dispergierenden Mittel übereinstimmende Gittermonochromatoren (36, 58) sind.

EP 0 427 966 A2

Fig.1

Fig.2

64

34

68

70

66

50

EP 0 427 966 A2